# EUROPÄISCHE PATENTANMELDUNG

(11) **EP 2 745 684 A1**
(43) Veröffentlichungstag der Anmeldung: **25.06.2014**
(21) Anmeldenummer: 13198528.5
(22) Anmeldetag: 19.12.2013
(51) Int. Cl.: A01K 83/02, A01K 83/06, A01K 85/02

(54) **Angelhaken-Vorrichtung**

(30) Priorität: 19.12.2012 AT 4762012 U
(71) Anmelder: Zeiss, Franz, 7141 Podersdorf am See (AT)
(72) Erfinder: Zeiss, Franz, 7141 Podersdorf am See (AT)
(74) Vertreter: KLIMENT & HENHAPEL

(57) **Zusammenfassung**

Die Erfindung bezieht sich auf eine Angelhaken-Vorrichtung (1) zur Ausbildung eines Angelhakens zum Angeln von Fischen, umfassend:
- einen gehäuseartigen Teil (2), der in seiner Wand zumindest eine Ausnehmung (3), vorzugsweise in Form eines Schlitzes, aufweist, wobei in die Ausnehmung (3) ein Angelhakenteil (4) einsetzbar ist, um sich vom Inneren des gehäuseartigen Teils (2) durch die Ausnehmung (3) nach außen hin zu erstrecken, und
- einen Einziehmechanismus (5), der eine Ankopplungsstelle (6) für einen Angelhakenteil (4) aufweist und dazu ausgebildet ist, einen sich außerhalb des gehäuseartigen Teils (2) erstreckenden Abschnitt des Angelhakenteils (4) in das Innere des gehäuseartigen Teils (2) zu ziehen, und der Einziehmechanismus (5) ein Schiebeelement (7) umfasst, das zumindest teilweise im Inneren des gehäuseartigen Teils (2) verläuft und die Ankopplungsstelle (6) für den Angelhakenteil (4) ausbildet, wobei Schiebeelement (7) und gehäuseartiger Teil (2) gegeneinander verschiebbar sind.

Um eine einfache Konstruktion bereitzustellen ist dabei vorgesehen, dass das Schiebeelement (7) ein hülsenförmiger Körper ist, der konzentrisch in das gehäuseartige Teil (2) eingesetzt ist.

## Beschreibung

Die Erfindung bezieht sich auf eine Angelhaken-Vorrichtung zur Ausbildung eines Angelhakens zum Angeln von Fischen.

Das Lösen eines Fisches von im Stand der Technik bekannten Angelhaken ist mitunter nicht nur mühsam, sondern stellt meist eine Qual für den noch lebenden Fisch dar. Bei der geometrischen Form des Angelhakens bleibt dem Fischer zumeist nichts anderes übrig, als den Fisch vom Haken zu reißen, wodurch die vom Haken verursachte Wunde des Fisches erweitert bzw. gänzlich aufgerissen wird.

Aus der US 2 851 817 A ist ein Angelhaken mit mehreren ausklappbaren Haken bekannt, bei welchem ein gehäuseartiger Teil rundum eine Anzahl von Schlitzen aufweist, durch welche die Haken ausklappen.

Es besteht daher der Bedarf, eine verbesserte AngelhakenVorrichtung bereitzustellen, die diese Nachteile nicht aufweist. Der Fisch soll einfach und schonend vom Angelhaken lösbar sein, die Verletzungen des Fisches sollen möglichst geringfügig bleiben. Eine Angelhaken-Vorrichtung soll sich durch einfache Konstruktion und Handhabung auszeichnen. Außerdem soll der Angelhaken kostengünstig herstellbar sein.

Dieses Ziel wird mit einer Angelhaken-Vorrichtung der eingangs genannten Art, welche
einen gehäuseartigen Teil, der in seiner Wand zumindest eine Ausnehmung, vorzugsweise in Form eines Schlitzes, aufweist, wobei in die Ausnehmung ein Angelhakenteil einsetzbar ist, um sich vom Inneren des gehäuseartigen Teils durch die Ausnehmung nach außen hin zu erstrecken, und
einen Einziehmechanismus umfasst, der eine Ankopplungsstelle für einen Angelhakenteil aufweist und dazu ausgebildet ist, einen sich außerhalb des gehäuseartigen Teils erstreckenden Abschnitt des Angelhakenteils in das Innere des gehäuseartigen Teils zu ziehen, und
der Einziehmechanismus ein Schiebeelement umfasst, das zumindest teilweise im Inneren des gehäuseartigen Teils verläuft und die Ankopplungsstelle für den Angelhakenteil ausbildet, wobei Schiebeelement und gehäuseartiger Teil gegeneinander verschiebbar sind, dadurch erreicht, dass
das Schiebeelement ein hülsenförmiger Körper ist, der konzentrisch in das gehäuseartige Teil eingesetzt ist. Dies stellt eine einfache Konstruktion dar, da ein hülsenförmiger Körper (Schiebeelement) im anderen hülsenförmigen Körper (Gehäuse) zuverlässig und axial verschiebbar gelagert werden kann. Die Ankopplungsstelle ist bevorzugt im Endbereich des hülsenförmigen Körpers angeordnet.

Der gehäuseartige Teil bildet zusammen mit einem Angelhakenteil den eigentlichen Angelhaken. Durch das Einziehen des Angelhakenteils in das Innere des gehäuseartigen Teils wird der Angelhakenteil schonend aus dem Fisch zurückgezogen und verschwindet im Gehäuseinneren. Dies bedeutet, dass - im Gegensatz zum Stand der Technik - nicht der Fisch vom Haken gerissen wird, sondern es wird zunächst der Angelhakenteil in eine den Fisch nicht mehr fixierende Position gebracht. Anschließend kann der Fisch ohne weitere Verletzungen zu bewirken von der Angelhaken-Vorrichtung weg gelegt werden. Während des Fischens hängt die AngelhakenVorrichtung an einer Angelschnur und besitzt dafür Befestigungsstellen zum Befestigen der Angelschnur.

Das Gehäuse bzw. der gehäuseartige Teil kann z.B. in Form einer Hülse, eines kugel-, ellipsen- oder ovalförmigen Gehäuses ausgebildet sein oder andere beliebige Formen annehmen. Das Gehäuse umschließt einen Innenraum, in dem zumindest ein Teil des Einziehmechanismus untergebracht ist. Außerdem verfügt das Gehäuse über Raum, um den Angelhakenteil zumindest teilweise aufzunehmen.

Der Einziehmechanismus wirkt auf den Angelhakenteil und bringt diesen bei Bedarf in Richtung des Gehäuseinneren. Der Einziehmechanismus ist von außerhalb des gehäuseartigen Teils betätigbar, sodass der Fischer nicht den Angelhakenteil greifen muss, um ihn aus dem Fisch zu ziehen, sondern lediglich den Einziehmechanismus betätigen muss.

Um den Fisch beim Lösen von der Angelhaken-Vorrichtung möglichst zu schonen, entspricht die Einziehrichtung des Einziehmechanismus (bzw. der dadurch bewirkte Einziehverlauf des Angelhakenteils) zumindest im Wesentlichen dem Verlauf des Angelhakenteils außerhalb des gehäuseartigen Teils. Der Angelhakenteil wird dadurch auf demselben Weg aus dem Fisch herausgezogen, auf dem er in den Fisch eingedrungen ist. Bei einem geradlinigen Verlauf des Angelhakenteils wird die Einziehrichtung im Wesentlichen diesem geradlinigen Verlauf folgen bzw. entsprechen. Es wäre selbstverständlich auch denkbar die Einziehbewegung bei einem gebogenen Angelhakenteil durch eine (zumindest teilweise) Rotationsbewegung zu erzielen.

Bevorzugt ist die Angelhaken-Vorrichtung gekennzeichnet durch einen Angelhakenteil, der an der Ankopplungsstelle des Einziehmechanismus angekoppelt ist und sich vom Inneren des gehäuseartigen Teils durch die Ausnehmung nach außen hin erstreckt. In dieser Ausführung ist die Angelhaken-Vorrichtung bereit konfiguriert, um mit ihr Fische zu angeln. Es ist nämlich grundsätzlich denkbar, dass Angelhakenteile gesondert gefertigt und verkauft werden und vom Fischer selbst in die Angelhaken-Vorrichtung eingesetzt werden. Die Angelhakenteile sind dadurch bevorzugt austauschbar.

Bevorzugt ist der gehäuseartige Teil ein hülsenförmiger Körper, wobei die Ausnehmung im Mantel des hülsenförmigen Körpers ausgebildet ist. Die stellt eine einfache und zweckmäßige geometrische Form dar, da sie zusammen mit dem Angelhakenteil einen optimalen Angelhaken bildet. Außerdem kann das Innere der Hülse einen einfachen Einziehmechanismus beherbergen.

Bevorzugt weist der das Schiebeelement bildende hülsenförmige Körper in seinem Mantel eine Ausnehmung, vorzugsweise in Form eines Schlitzes, auf, die mit der Ausnehmung in der Wand des gehäuseartigen Teils überlappt, wobei der Angelhakenteil durch beide Ausnehmungen ragt. Dadurch kann der Angelhakenteil auch ins Innere des Schiebeelementes gezogen werden, wodurch der Raum optimal ausgenutzt wird.

Bevorzugt ist die Ausnehmung im Mantel des Schiebeelements in axialer Richtung länger als die Ausnehmung in der Wand des gehäuseartigen Teils, und/oder ist die Ausnehmung im Mantel des Schiebeelements in axialer Richtung zumindest im Wesentlichen so lang wie der sich außerhalb des gehäuseartigen Teils erstreckende Abschnitt des Angelhakenteils. Dadurch kann der gesamte Angelhakenteil im Inneren des Schiebeelementes untergebracht werden, ohne dass vom Außengehäuse noch etwas vom Angelhakenteil abragt.

Bevorzugt bildet die Ankopplungsstelle mit dem Angelhakenteil eine formschlüssige Verbindung aus. Dies ermöglicht ein leichtes Einsetzen bzw. Austauschen des Angelhakenteils.

Bevorzugt ist die Ankopplungsstelle an dem der Ausnehmung gegenüberliegenden Wandteil des Schiebeelementes ausgebildet. Dies stellt eine besonders platzsparende und einfache Konstruktion dar.

Bevorzugt bildet die Ankopplungsstelle eine im Wesentlichen parallel zur Hülsenachse des Schiebeelementes verlaufende Aufnahme, in die ein entsprechend umgebogener Abschnitt des Angelhakenteils eingesetzt ist. Dies erlaubt ein zuverlässiges Anziehen am Angelhakenteil, ohne dass sich dieser aus seiner Befestigung lösen kann.

Bevorzugt weist der sich außerhalb des gehäuseartigen Teils erstreckende Abschnitt des Angelhakenteils einen im Wesentlichen geradlinigen Verlauf auf. Dieser Abschnitt schließt mit dem gehäuseartigen Teil einen bevorzugt spitzen Winkel ein, um dadurch einen Haken zu bilden. Das Zurückziehen des Angelhakenteils entlang seines geradlinigen Verlaufes aus dem Fisch ist daher ein besonders schonender Vorgang. Ein derartiges Zurückziehen ist vergleichbar mit dem Zurückziehen einer Injektionsnadel.

Bevorzugt ist der Angelhakenteil aus federndem Material, vorzugsweise Federstahl, gebildet. Dies ermöglicht einerseits eine Flexibilität, die beim Einziehen vorteilhaft ist, andererseits kann die Federkraft für ein Vorspannen des Angelhakenteils benutzt werden.

Bevorzugt bildet der Angelhakenteil eine Federschlaufe aus, vorzugsweise in seinem im Inneren des gehäuseartigen Teils verlaufenden Abschnitt. Dadurch werden die federnden Eigenschaften auf platzsparende Weise erhöht.

Bevorzugt stützt sich der Angelhakenteil am Rand der Ausnehmung des gehäuseartigen Teils ab. Dies bewirkt eine Art Fixierung, die den Angelhaken bei Zubeißen des Fisches in einer Richtung verhältnismäßig steif hält.

Bevorzugt drückt das Schiebeelement durch die Federkraft des Angelhakenteils gegen einen Anschlag des gehäuseartigen Teils, wobei vorzugsweise ein am Schiebeelement ausgebildeter Flansch von außen gegen einen Rand des gehäuseartigen Teils drückt. Hier braucht es keiner gesonderten Verbindungskraft zwischen Schiebeelement und Gehäuseteil. Der Angelhakenteil sorgt dafür, dass Schiebeelement und Gehäuseteil nicht auseinander fallen.

Bevorzugt ist an der Außenseite des gehäuseartigen Teils zumindest eine Befestigungsstelle für einen Köderhalter ausgebildet, vorzugsweise in Form einer umlaufenden Rille bzw. Schiene.

Bevorzugt ist der Köderhalter auf die Befestigungsstelle aufclipsbar. Dies ermöglicht einfachen Austausch.

Bevorzugt weist der Köderhalter einen auf die Befestigungsstelle aufsetzbaren spangenförmigen Befestigungsteil und einen Köderspieß. Dadurch erfolgt eine zuverlässige Anbindung des Köderhalters.

Bevorzugt ist die Angelhaken-Vorrichtung gekennzeichnet durch zumindest eine Köderfeder, die einen im oberen Bereich des Köderspießes verlaufenden Abschnitt aufweist, um den Köder gegen den Köderspieß zu drücken. Dies erhöht die Sicherung des Köders am Angelhaken.

Bevorzugt weist die Köderfeder einen spangenförmigen Befestigungsteil und als im oberen Bereich des Köderspießes verlaufenden Abschnitt einen abgewinkelten Bügel auf, wobei vorzugsweise der Bügel mit der vom spangenförmigen Befestigungsteil aufgespannten Ebene einen Winkel zwischen 80° und 90° einschließt, vorzugsweise etwa 88°. Dies ermöglicht einerseits zuverlässige Befestigung, anderseits sicheres Halten des Köders.

Im Folgenden werden bevorzugte Ausführungsformen der Erfindung anhand der Zeichnung näher beschrieben. Dabei zeigt
Fig. 1 eine erfindungsgemäße Angelhaken-Vorrichtung,
Fig. 2 einen gehäuseartigen Teil im Detail, mit einer in die Bildebene gedrehten Ansicht der schlitzförmigen Ausnehmung,
Fig. 3 einen hülsenförmigen Schiebeteil im Detail, mit einer in die Bildebene gedrehten Ansicht der schlitzförmigen Ausnehmung,
Fig. 4 einen Angelhakenteil in zwei, um 90° gedrehten Ansichten,
Fig. 5 einen Köderhalter in zwei, um 90° gedrehten Ansichten,
Fig. 6 eine Köderfeder in zwei, um 90° gedrehten Ansichten,
Fig. 7 eine Köderfeder im Schnitt A-A gemäß Fig. 6.

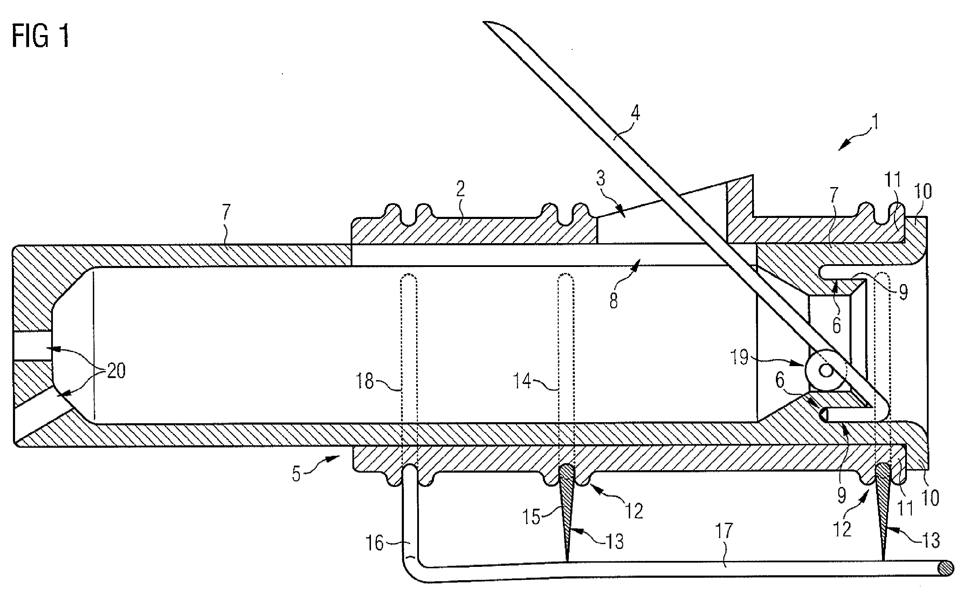

Fig. 1 zeigt ein bevorzugtes Ausführungsbeispiel der Erfindung. Die Angelhakenvorrichtung 1 umfasst ein gehäuseartiges Teil 2 (äußeres Gehäuseteil) in Form eines hülsenförmigen Körpers. Dieser weist in seinem Mantel eine Ausnehmung 3 auf, durch die ein Angelhakenteil 4 ragt. Im Inneren des hülsenförmigen Gehäuseteils 2 ist ein Schiebeelement 7, ebenfalls in Form eines hülsenförmigen Körpers ausgebildet, eingesetzt. Der Gehäuseteil 2 und das Schiebeelement 7 sind konzentrisch zueinander angeordnet und entlang ihrer Längsachsen gegeneinander verschiebbar. Im Überlappungsbereich mit der Ausnehmung 3 des Gehäuseteils 2 weist auch das Schiebeelement 7 in seinem Mantel eine Ausnehmung 8 auf.

Die innere Hülse weist eine Ankopplungsstelle 6 auf, in die der Angelhakenteil 4 formschlüssig eingesetzt ist. Die Ankopplungsstelle 6 ist in Form einer parallel zur Hülsenlängsachse verlaufenden Aufnahme 9 gebildet, in die ein ab- bzw. umgebogener Abschnitt des Angelhakenteils 4 sitzt. Ausgehend von der Ankopplungsstelle 6 erstreckt sich der Angelhakenteil 4 in Richtung des gegenüberliegenden Wandteils des Schiebeelementes 7, tritt dort durch die Ausnehmung 8 hindurch, ragt ebenfalls durch die Ausnehmung 3 des äußeren Gehäuseteils 2 hindurch und besitzt einen im Wesentlichen geradlinig verlaufenden Abschnitt außerhalb des Gehäuseteils 2, der in der Angelhakenspitze mündet. Dieser äußere Abschnitt des Angelhakenteils 4 bildet zusammen mit dem Gehäuseteil 2 einen Angelhaken.

Der Angelhakenteil 4 besteht aus bevorzugt federndem Material und ist im vorliegenden Fall mit einer Federschlaufe 19 ausgestattet, die sich im Inneren der inneren Hülse (Schiebeelement 7) befindet. Der Angelhakenteil 4 stützt sich gegen den Rand der Ausnehmung 3 ab und drückt den Gehäuseteil 2 gegen das Schiebeelement 7. Dabei werden ein Anschlag 11 des Gehäuseteils 2 und ein Flansch 10 der inneren Hülse gegeneinander gedrückt.

Hängt nun ein Fisch am Haken, muss lediglich das Schiebeelement 7 relativ zum Gehäuseteil 2 (nach rechts) verschoben werden, wodurch der Angelhakenteil 4 ins Innere des äußeren Gehäuseteils 2 gezogen und in das Innere des Schiebelementes 7 gedrückt wird. Die Ausnehmung 8 im Schiebeelement 7 ist zumindest so lang, dass der gesamte Angelhakenteil 4 in das Innere des Schiebeelementes 7 gelangen kann.

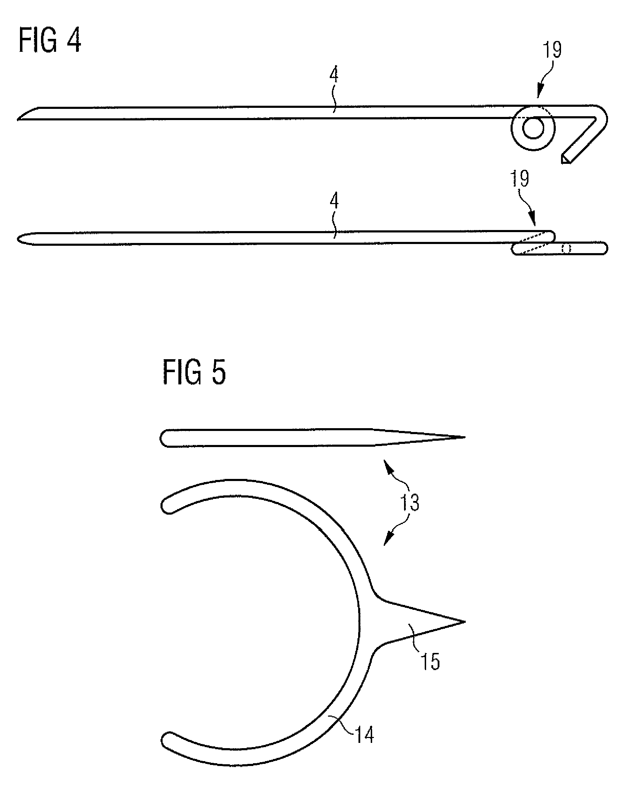

An der Außenseite des äußeren gehäuseartigen Teils 2 sind Befestigungsstellen 12 für die Befestigung eines Köderhalters 13 und einer Köderfeder 16 vorgesehen. Die Beschaffenheit von Köderhalter 13 und Köderfeder 16 werden weiter unten anhand der Fig. 5 bis 7 noch näher erläutert.

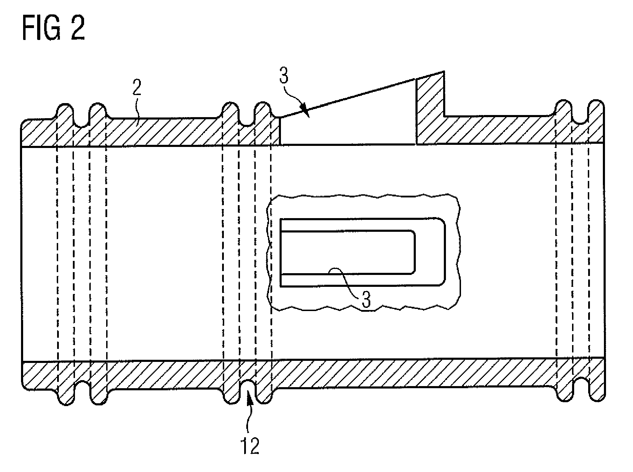

Fig. 2 zeigt den äußeren Gehäuseteil 2 im Detail, wobei im Ausschnitt die Ausnehmung 3 in die Bildebene gedreht ist. Wie daraus ersichtlich handelt es sich bei der Ausnehmung 3 vorzugsweise um eine schlitzförmige Öffnung im Mantel der Hülse. Um in einer Angelhaken-Vorrichtung 1 mehrere Angelhakenteile 4 unterzubringen, ist es denkbar, dass um den Umfang des Gehäuseteils 2 mehrere Ausnehmungen 3 vorgesehen sind, die jeweils einen Angelhakenteil 4 enthalten können. Beispielsweise können zwei Angelhakenteile um 180° versetzt vorgesehen sein oder drei Angelhakenteile um 120°.

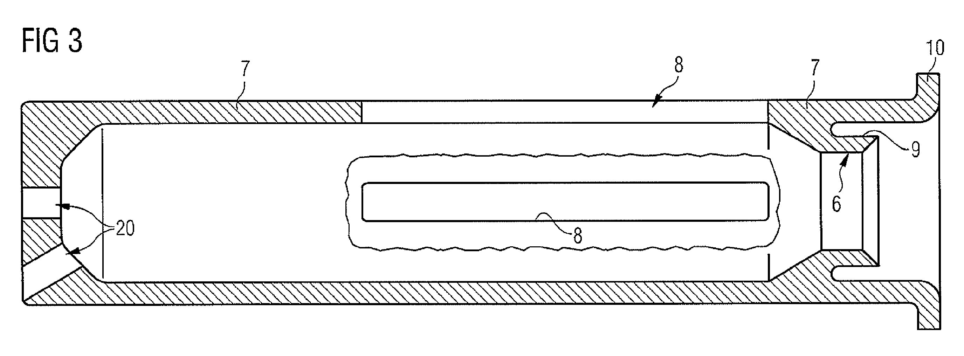

Analog zur Darstellung der Fig. 2 ist in Fig. 3 das Schiebeelement 7 im Detail dargestellt, wobei wiederum die Ausnehmung 8 im Ausschnitt in einer in die Bildebene gedrehten Ansicht zu sehen ist. Bei mehreren Angelhakenteilen sind hier (analog zum äußeren Gehäuseteil 2) mehrere um den Umfang verteilte Ausnehmungen 8 vorzusehen, die mit den korrespondierenden Ausnehmungen 3 des Gehäuseteils 2 überlappen.

Im (linken) Endbereich des Schiebeelementes 7, das ja über den Gehäuseteil 2 hinausragt (Figur 1), sind Befestigungsstellen 20 zur Befestigung einer Angelschnur vorgesehen. Diese können wie hier dargestellt in Form von durchgehenden Löchern ausgebildet sein.

Fig. 4 zeigt zum besseren Verständnis den Angelhakenteil 4 in gesonderter Darstellung und in zwei um 90° gedrehten Ansichten. Zu sehen ist der im Wesentlichen geradlinig verlaufende Abschnitt mit der Angelhakenspitze, die Federschlaufe 19 und der umgebogene Abschnitt für die formschlüssige Befestigung an der inneren Hülse 7.

Fig. 5 zeigt einen Köderhalter 13 mit einem spangenförmigen Befestigungsteil 14 und einem davon abragenden Köderspieß 15. Der spangenförmige Befestigungsteil 14 ist auf die Befestigungsstelle 12 des Gehäuseteils 2 aufclipsbar, d.h. an dieser kraft- und formschlüssig befestigbar.

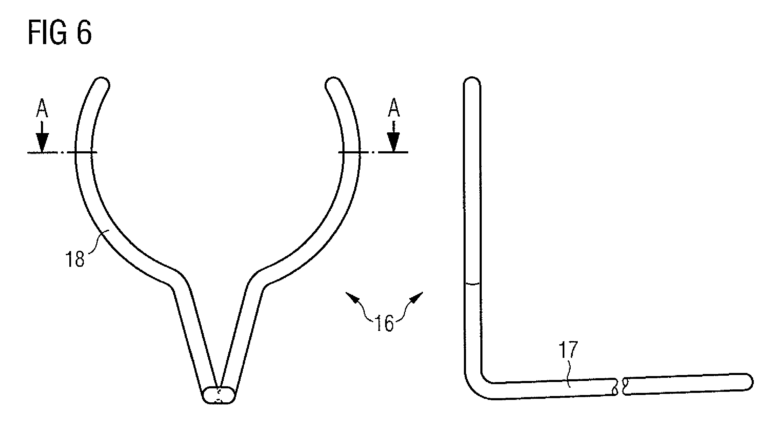

Fig. 6 zeigt eine Köderfeder 16, die ebenfalls einen spangenförmigen Befestigungsteil 18 aufweist, mit dem sie an eine Befestigungsstelle des äußeren Gehäuseteils 2 aufclipsbar ist. Ein abgewinkelter Bügel 17 erstreckt sich vom Befestigungsteil 18 weg und schließt mit der durch den spangenförmigen Befestigungsteil 18 aufgespannten Ebene einen Winkel von vorzugsweise 88° ein. Selbstverständlich sind auch andere Winkel denkbar, jedoch hat sich einen Winkel, der geringfügig kleiner ist als 90° besonders bewährt, um Köder auf mehreren Köderspießen zuverlässig zu halten.

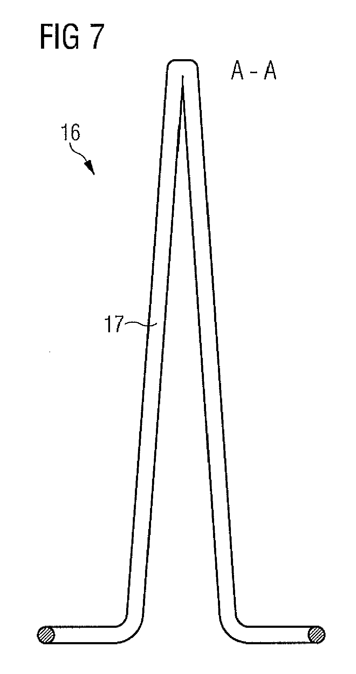

Die Fig. 7 zeigt schließlich den Bügel 17 von oben. Die aufgesetzte Köderfeder 16 drückt die Köder gegen die Köderspieße 15. Köderhalter 13 und Köderfeder 16 können ebenfalls aus federndem Material, vorzugsweise Federstahl gebildet sein.

Vielzählige Varianten sind denkbar, insbesondere kann der Einziehmechanismus andere Formen aufweisen und zum Beispiel als Stab, als entlang der Längsachse geteilte Hülse oder als sonstiges Betätigungselement ausgebildet sein. Auch die Befestigung des Angelhakenteils 4 am Schiebeelement 7 kann von jeder erdenklichen Art sein. Dies umfasst formschlüssige, kraftschlüssige, lösbare oder fixe Verbindungen.

Je nach Größe der zu angelnden Fische können die Dimensionen und Größenverhältnisse der erfindungsgemäßen Angelhaken-Vorrichtung bedarfsmäßig angepasst und abgeändert werden. Dies betrifft sowohl die Angel, als auch ihre Einzelteile und das Zubehör. Im Folgenden wird das vorteilhafte Prinzip nochmals zusammengefasst. Nachdem Einziehen der Angelschnur wird der am Angelhaken hängende Fisch befreit. Dazu legt der Angler den Fisch auf eine stabile Unterlage oder auf den Boden. Er fixiert den Fisch mit der einen Hand, während Zeige- und Mittelfinger der anderen Hand den äußeren Gehäuseteil 2 umfassen. Der Daumen drückt das Schiebeelement 7 in Richtung des Rachens des gefangenen Fisches. Dadurch gleitet der Angelhakenteil 4 aus dem Maul bzw. Rachen des Fisches und wird zunächst in das Innere des Gehäuseteils 2 gezogen und gelangt auch in die innere Hülse 7. Damit ist der gefangene Fisch befreit. Nun kann die erfindungsgemäße Angelhaken-Vorrichtung als Ganzes problemlos aus dem Maul bzw. Rachen gezogen werden. Unabhängig davon, ob die Angelhaken-Vorrichtung einen, zwei, drei oder mehrere Angelhakenteile hat, gleiten die Angelhakenteile bei der Handhabung aus dem Rachen des gefangenen Fisches und die Angelhaken-Vorrichtung kann problemlos aus dem Maul bzw. Rachen des Fisches entfernt werden. Der Fisch wird nun, je nach Absicht des Anglers als Fang behalten oder wieder ins Gewässer zurück entlassen. Die Handhabung einer erfindungsgemäßen Angelhaken-Vorrichtung ist konkurrenzlos einfach für den Angler sowie schonend und schmerzminimierend für den Fisch. Wenn der Angler sofort wieder fischen will, muss er im Bedarfsfall die Angelhaken-Vorrichtung neuerlich mit einem Ködertier oder einer Ködermasse bestücken. Nun kann die Angel wieder ausgeworfen werden.

Die Erfindung ist nicht auf die beschriebene Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

## Patentansprüche

1. Angelhaken-Vorrichtung (1) zur Ausbildung eines Angelhakens zum Angeln von Fischen, umfassend:
- einen gehäuseartigen Teil (2), der in seiner Wand zumindest eine Ausnehmung (3), vorzugsweise in Form eines Schlitzes, aufweist, wobei in die Ausnehmung (3) ein Angelhakenteil (4) einsetzbar ist, um sich vom Inneren des gehäuseartigen Teils (2) durch die Ausnehmung (3) nach außen hin zu erstrecken, und
- einen Einziehmechanismus (5), der eine Ankopplungsstelle (6) für einen Angelhakenteil (4) aufweist und dazu ausgebildet ist, einen sich außerhalb des gehäuseartigen Teils (2) erstreckenden Abschnitt des Angelhakenteils (4) in das Innere des gehäuseartigen Teils (2) zu ziehen, und der Einziehmechanismus (5) ein Schiebeelement (7) umfasst, das zumindest teilweise im Inneren des gehäuseartigen Teils (2) verläuft und die Ankopplungsstelle (6) für den Angelhakenteil (4) ausbildet, wobei Schiebeelement (7) und gehäuseartiger Teil (2) gegeneinander verschiebbar sind,
**dadurch gekennzeichnet, dass** das Schiebeelement (7) ein hülsenförmiger Körper ist, der konzentrisch in das gehäuseartige Teil (2) eingesetzt ist.

2. Angelhaken-Vorrichtung nach Anspruch 1, **gekennzeichnet durch:**
- einen Angelhakenteil (4), der an der Ankopplungsstelle (6) des Einziehmechanismus (5) angekoppelt ist und sich vom Inneren des gehäuseartigen Teils (2) **durch** die Ausnehmung (3) nach außen hin erstreckt.

3. Angelhaken-Vorrichtung nach Anspruch 1 oder 2, **dadurch gekennzeichnet, dass** der gehäuseartige Teil (2) ein hülsenförmiger Körper ist, wobei die Ausnehmung (3) im Mantel des hülsenförmigen Körpers ausgebildet ist.

4. Angelhaken-Vorrichtung nach einem der vorhergehenden Ansprüche, **dadurch gekennzeichnet, dass** der das Schiebeelement (7) bildende hülsenförmige Körper in seinem Mantel eine Ausnehmung (8), vorzugsweise in Form eines Schlitzes, aufweist, die mit der Ausnehmung (3) in der Wand des gehäuseartigen Teils (2) überlappt, wobei der Angelhakenteil (4) durch beide Ausnehmungen (3, 8) ragt.

5. Angelhaken-Vorrichtung nach Anspruch 4, **dadurch gekennzeichnet, dass** die Ausnehmung (8) im Mantel des Schiebeelements (7) in axialer Richtung länger ist als die Ausnehmung (3) in der Wand des gehäuseartigen Teils (2), und/oder dass die Ausnehmung (8) im Mantel des Schiebeelements (7) in axialer Richtung zumindest im Wesentlichen so lang ist wie der sich außerhalb des gehäuseartigen Teils (2) erstreckende Abschnitt des Angelhakenteils (4).

6. Angelhaken-Vorrichtung nach einem der vorhergehenden Ansprüche, **dadurch gekennzeichnet, dass** die Ankopplungsstelle (6) mit dem Angelhakenteil (4) eine formschlüssige Verbindung ausbildet.

7. Angelhaken-Vorrichtung nach Anspruch 4 oder 5, **dadurch gekennzeichnet, dass** die Ankopplungsstelle (6) an dem der Ausnehmung (8) gegenüberliegenden Wandteil des Schiebeelementes (7) ausgebildet ist.

8. Angelhaken-Vorrichtung nach einem der Ansprüche 4 bis 6, **dadurch gekennzeichnet, dass** die Ankopplungsstelle (6) eine im Wesentlichen parallel zur Hülsenachse des Schiebeelementes (7) verlaufende Aufnahme (9) bildet, in die ein entsprechend umgebogener Abschnitt des Angelhakenteils (4) eingesetzt ist.

9. Angelhaken-Vorrichtung nach einem der vorhergehenden Ansprüche, **dadurch gekennzeichnet, dass** sich der Angelhakenteil (4) am Rand der Ausnehmung (3) des gehäuseartigen Teils (2) abstützt.

10. Angelhaken-Vorrichtung nach einem der vorhergehenden Ansprüche, **dadurch gekennzeichnet, dass** das Schiebeelement (7) durch die Federkraft des Angelhakenteils (4) gegen einen Anschlag (11) des gehäuseartigen Teils (2) drückt, wobei vorzugsweise ein am Schiebeelement (7) ausgebildeter Flansch (10) von außen gegen einen Rand des gehäuseartigen Teils (2) drückt.

11. Angelhaken-Vorrichtung nach einem der vorhergehenden Ansprüche, **dadurch gekennzeichnet, dass** an der Außenseite des gehäuseartigen Teils (2) zumindest eine Befestigungsstelle (12) für einen Köderhalter (13) und/oder für eine Köderfeder (16) ausgebildet ist, vorzugsweise in Form einer umlaufenden Rille bzw. Schiene.

12. Angelhaken-Vorrichtung nach Anspruch 11, **dadurch gekennzeichnet, dass** der Köderhalter (13) auf die Befestigungsstelle (12) aufclipsbar ist.

13. Angelhaken-Vorrichtung nach Anspruch 11 oder 12, **dadurch gekennzeichnet, dass** der Köderhalter (13) einen auf die Befestigungsstelle (12) aufsetzbaren spangenförmigen Befestigungsteil (14) und einen Köderspieß (15) aufweist.

14. Angelhaken-Vorrichtung nach einem der Ansprüche 11 bis 13, **gekennzeichnet durch** zumindest eine Köderfeder (16), die einen im oberen Bereich des Köderspießes (15) verlaufenden Abschnitt aufweist, um den Köder gegen den Köderspieß (15) zu drücken.

15. Angelhaken-Vorrichtung nach Anspruch 14, **dadurch gekennzeichnet, dass** die Köderfeder (16) einen spangenförmigen Befestigungsteil (18) und als im oberen Bereich des Köderspießes (15) verlaufenden Abschnitt einen abgewinkelten Bügel (17) aufweist, wobei vorzugsweise der Bügel (17) mit der vom spangenförmigen Befestigungsteil (18) aufgespannten Ebene einen Winkel zwischen 80° und 90° einschließt, vorzugsweise etwa 88°.
